# EUROPÄISCHE PATENTSCHRIFT

(11) **EP 2 443 003 B1**
(45) Veröffentlichungstag und Bekanntmachung des Hinweises auf die Patenterteilung: **10.08.2016**
(21) Anmeldenummer: 10725617.4
(22) Anmeldetag: 16.06.2010
(51) Int. Cl.: B60N 3/02, F16B 5/06, F16B 21/07

(54) **VERBINDUNGSBAUGRUPPE**
CONNECTION ASSEMBLY
ENSEMBLE DE CONNEXION

(30) Priorität: 16.06.2009 DE 102009024983
(43) Veröffentlichungstag der Anmeldung: 25.04.2012
(73) Patentinhaber: TRW Automotive Electronics & Components GmbH, 78315 Radolfzell (DE)
(72) Erfinder: HOFMANN, Juergen, 67304 Eisenberg (DE); ELSNER, Markus, 67657 Kaiserslautern (DE); LOEWE, Hubert, 66919 Weselberg (DE)
(74) Vertreter: Prinz & Partner mbB
(86) Internationale Anmeldenummer: PCT/EP2010/003593
(87) Internationale Veröffentlichungsnummer: WO 2010/145806

(56) Entgegenhaltungen:
- DE-A1-102006 032 943
- DE-U1-202008 010 262
- GB-A- 2 388 150
- US-B1- 6 196 756

## Beschreibung

Die Erfindung betrifft eine Verbindungsbaugruppe zur Befestigung eines Anbauteils an einem Trägerteil, mit einer Klammer, die einen verformbaren Verriegelungsabschnitt zur Befestigung der Klammer am Trägerteil aufweist, sowie einem separaten Verriegelungspin, der durch eine Bewegung in Montagerichtung längs einer Montageachse von der Klammer aufgenommen werden kann, wobei die Klammer und der Verriegelungspin zusammenwirkende Rastelemente aufweisen, welche in einer Vormontagestellung und in einer Verriegelungsstellung Schnappverbindungen ausbilden, um den Verriegelungspin an der Klammer axial zu fixieren.

In der DE 10 2006 032 943 A1 ist ein Fahrzeug-Haltegriff mit einer Verbindungsbaugruppe offenbart. Dabei wird eine Metallklammer der Verbindungsbaugruppe zunächst an einem Lagerbock des Fahrzeug-Haltegriffs vorverrastet und in ihrer Lage gesichert. Danach wird ein Sicherungselement zwischen die Seitenwände der Metallklammer gedrückt, wobei die Metallklammer und das Sicherungselement in einer Vormontageposition eine Formschlussverbindung ausbilden. Üblicherweise wird der Fahrzeug-Haltegriff in dieser Vormontageposition angeliefert und an der Fahrzeugkarosserie befestigt. Die Befestigung erfolgt dabei mittels einfacher Handgriffe, ohne dass weitere, separate Befestigungsmittel notwendig wären.

Die gattungsgemäße DE 20 2008 010 262 U1 beschreibt eine Verbindungsbaugruppe zur Befestigung eines Anbauelements auf einem Trägerelement, mit einem ersten Verbindungsteil, das in eine Öffnung des Trägerelements einführbar ist und Haltemittel zur Festlegung des ersten Verbindungsteils am Trägerelement aufweist, sowie einem zweiten Verbindungsteil, das in eine Bohrung des Anbauteils einführbar ist, wobei das zweite Verbindungsteil in das erste Verbindungsteil einführbar ist. Die Verbindungsbaugruppe ist aus einem Vormontagezustand, in dem die Haltemittel ein Abziehen des ersten Verbindungsteils vom Trägerelement erlauben, überführbar in einen Montagezustand, in dem die Haltemittel ein Abziehen des ersten Verbindungsteils vom Trägerelement nicht erlauben. Dabei wird die Verbindungsbaugruppe durch Niederdrücken des zweiten Verbindungsteils in das erste Verbindungsteil in den Montagezustand und durch Drehung des zweiten Verbindungsteils relativ zum ersten Verbindungsteil aus dem Montagezustand zurück in den Vormontagezustand überführt.

Aufgabe der Erfindung ist es, die Verbindungsbaugruppe insbesondere hinsichtlich ihrer Montage- und Demontageeigenschaften zu verbessern.

Die Aufgabe wird gelöst durch eine Verbindungsbaugruppe mit den Merkmalen des Anspruchs 1. Die vormontierte Verbindungsbaugruppe lässt sich dann durch eine axiale Relativbewegung zwischen dem Verriegelungspin und der Klammer in ihre Verriegelungs-stellung überführen, in der das Anbauteil zuverlässig am Trägerteil befestigt ist. Die Verbindungsbaugruppe wird in der Vormontagestellung somit ausschließlich vom Verriegelungspin sowie der unverlierbar mit dem Verriegelungspin verbundenen Klammer gebildet und kann äußerst flexibel zur Befestigung eines beliebigen Anbauteils an einem Trägerteil eingesetzt werden. Anbauteile sind z.B. Haltegriffe, Stoßstangen, Fahrzeugverkleidungen, Türzargen etc. während das Trägerteil beispielsweise ein Karosserieblech sein kann.

Um den Montagevorgang zu vereinfachen, bildet der Verriegelungsabschnitt der Klammer beim Bewegen in die Befestigungsposition vorzugsweise eine Schnappverbindung mit dem Anbauteil und/oder dem Trägerteil aus.

Die Schnappverbindung zwischen der Klammer und dem Verriegelungspin weist in der Vormontagestellung eine axiale Haltekraft auf, die größer ist als eine axiale Widerstandskraft beim Bewegen der Verbindungsbaugruppe in die oder aus der Befestigungsposition. Dadurch lässt sich in vorteilhafter Weise ausschließlich durch eine Betätigung des Verriegelungspins in bzw. entgegen der Montagerichtung das Anbauteil am Trägerteil befestigen bzw. lösen.

Insbesondere können die Klammer und der Verriegelungspin zusammenwirkende Sperrelemente aufweisen, welche in der Vormontagestellung eine Rastverbindung ausbilden und eine zerstörungsfreie Demontagebewegung des Verriegelungspins relativ zur Klammer entgegen der Montagerichtung verhindern. Damit ist sichergestellt, dass nach einmaligem Zusammenfügen des Verriegelungspins und der Klammer stets eine einsatzbereite Verbindungsbaugruppe und keine für sich genommen unbrauchbaren Einzelkomponenten vorliegen.

Erfindungsgemäß ist die Klammer eine Metallklammer. Im Gegensatz zu Kunststoffklammern, bei denen die Qualität der geschaffenen Befestigung aufgrund des Relaxationsverhaltens von Kunststoff im Laufe der Zeit nachlässt, wird durch die Verwendung einer Klammer aus Metall eine dauerhafte und hochbelastbare Verbindung zwischen Anbauteil und Trägerteil geschaffen, deren hohe Qualität über die Zeit weitgehend konstant bleibt.

In einer Ausführungsform der Verbindungsbaugruppe ist die Klammer einstückig ausgebildet, um die Anzahl der Einzelbauteile zu minimieren.

Alternativ kann die Klammer auch zweiteilig ausgebildet sein. Sie umfasst dann vorzugsweise ein verformbares Verriegelungsteil sowie ein das Verriegelungsteil aufnehmendes Halteteil, wobei zumindest das Verriegelungsteil aus Metall gefertigt ist. Das Verriegelungsteil kann dabei weitgehend unabhängig von der Geometrie des Anbauteils oder des Trägerteils baugleich ausgeführt sein und bestimmt im Wesentlichen die axiale Widerstandskraft gegen ein Lösen des am Trägerteil befestigten Anbauteils. Geometrische Feinheiten wie die exakte Größe der Montageöffnungen oder die Dicke des Anbauteils lassen sich hingegen auf einfache Art und Weise über entsprechende Anpassungen des Halteteils berücksichtigen.

Zweckmäßige Ausgestaltungen der Erfindung und deren Vorteile ergeben sich aus den Unteransprüchen.

Weitere Einzelheiten werden anhand der in den Figuren dargestellten Ausführungsbeispiele näher erläutert. Es zeigen:
- Figur 1 eine perspektivische Ansicht der erfindungsgemäßen Verbindungsbaugruppe gemäß einer ersten Ausführungsform vor dem Zusammensetzen der Baugruppe;
- Figur 2 eine perspektivische Detailansicht eines Verriegelungspins der Verbindungsbaugruppe nach Figur 1;
- Figur 3 eine perspektivische Detailansicht einer Klammer der Verbindungsbaugruppe nach Figur 1;
- Figur 4 eine perspektivische Ansicht der Verbindungsbaugruppe gemäß der ersten Ausführungsform 1 in einer Vormontagestellung;
- Figur 5 einen Längsschnitt durch die Verbindungsbaugruppe gemäß Figur 4;
- Figur 6 einen weiteren Längsschnitt durch die Verbindungsbaugruppe gemäß Figur 4;
- Figur 7 eine perspektivische Ansicht der Verbindungsbaugruppe gemäß der ersten Ausführungsform in einer Verriegelungsstellung;
- Figur 8 einen Längsschnitt durch die Verbindungsbaugruppe gemäß Figur 7;
- Figur 9 eine Ansicht der Verbindungsbaugruppe gemäß Figur 4 vor der Befestigung eines Anbauteils an einem Trägerteil;
- Figur 10 eine Ansicht der Verbindungsbaugruppe gemäß Figur 7 nach der Befestigung eines Anbauteils an einem Trägerteil;
- Figur 11 eine weitere Ansicht der Verbindungsbaugruppe gemäß Figur 7 nach der Befestigung eines Anbauteils an einem Trägerteil;
- Figur 12 eine perspektivische Detailansicht eines Verriegelungspins der erfindungsgemäßen Verbindungsbaugruppe gemäß einer zweiten Ausführungsform;
- Figur 13 eine perspektivische Detailansicht einer Klammer der erfindungsgemäßen Verbindungsbaugruppe gemäß der zweiten Ausführungsform;
- Figur 14 eine perspektivische Ansicht der erfindungsgemäßen Verbindungsbaugruppe gemäß der zweiten Ausführungsform in der Vormontagestellung;
- Figur 15 einen Längsschnitt durch die Verbindungsbaugruppe gemäß Figur 14;
- Figur 16 einen weiteren Längsschnitt durch die Verbindungsbaugruppe gemäß Figur 14;
- Figur 17 eine perspektivische Ansicht der Verbindungsbaugruppe gemäß der zweiten Ausführungsform in einer Verriegelungsstellung;
- Figur 18 einen Längsschnitt durch die Verbindungsbaugruppe gemäß Figur 17;
- Figur 19 einen weiteren Längsschnitt durch die Verbindungsbaugruppe gemäß Figur 17;
- Figur 20 eine perspektivische Ansicht der Klammer gemäß Figur 13 in einer alternativen, zweiteiligen Ausführungsvariante;
- Figur 21 einen Längsschnitt durch die Klammer gemäß Figur 20; und
- Figur 22 einen weiteren Längsschnitt durch die Klammer gemäß Figur 20.

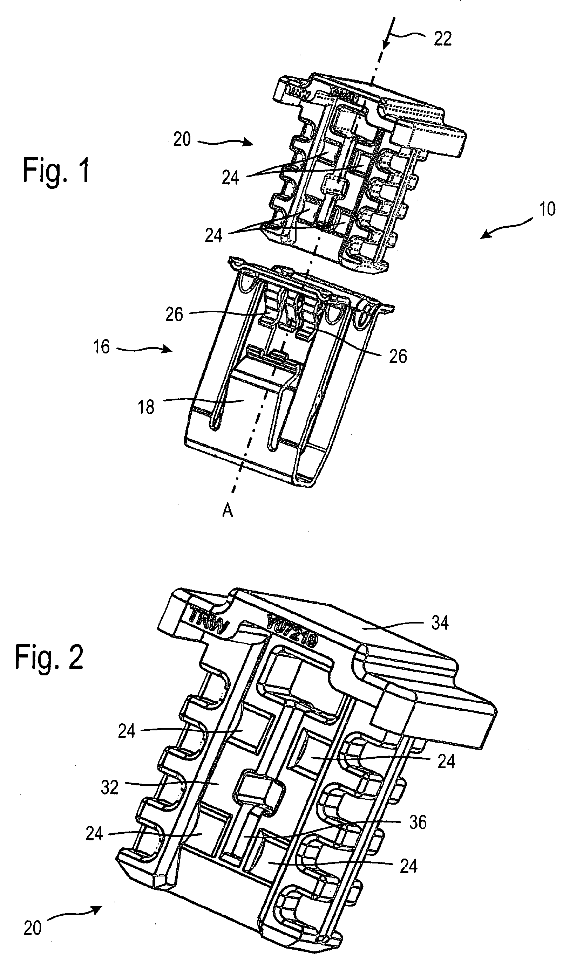

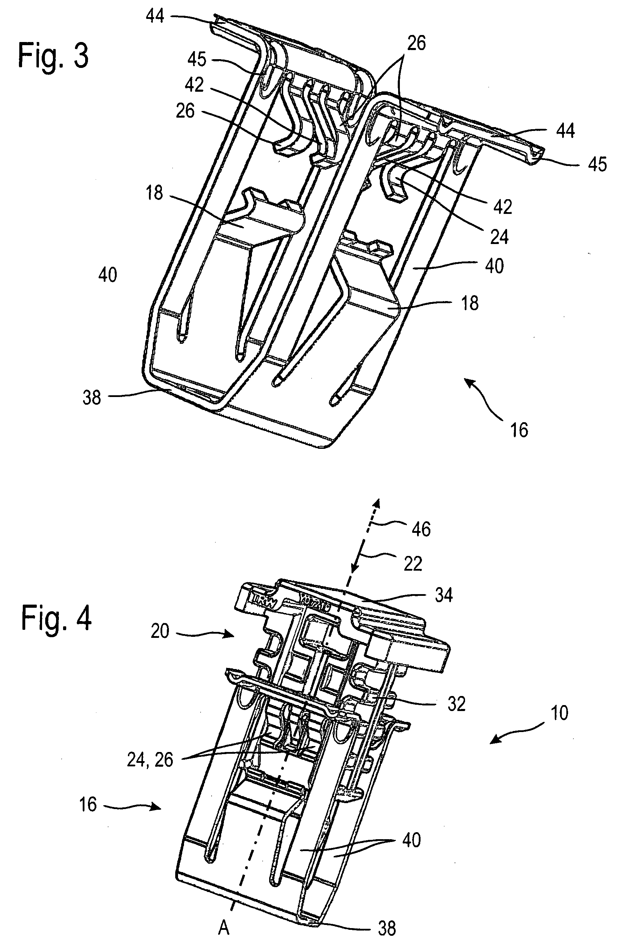

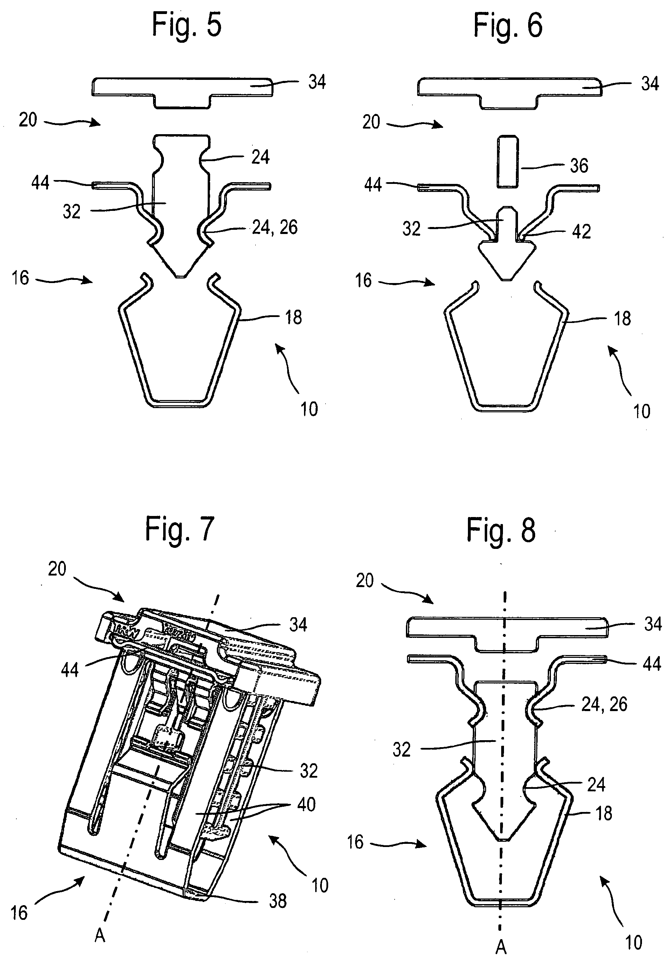

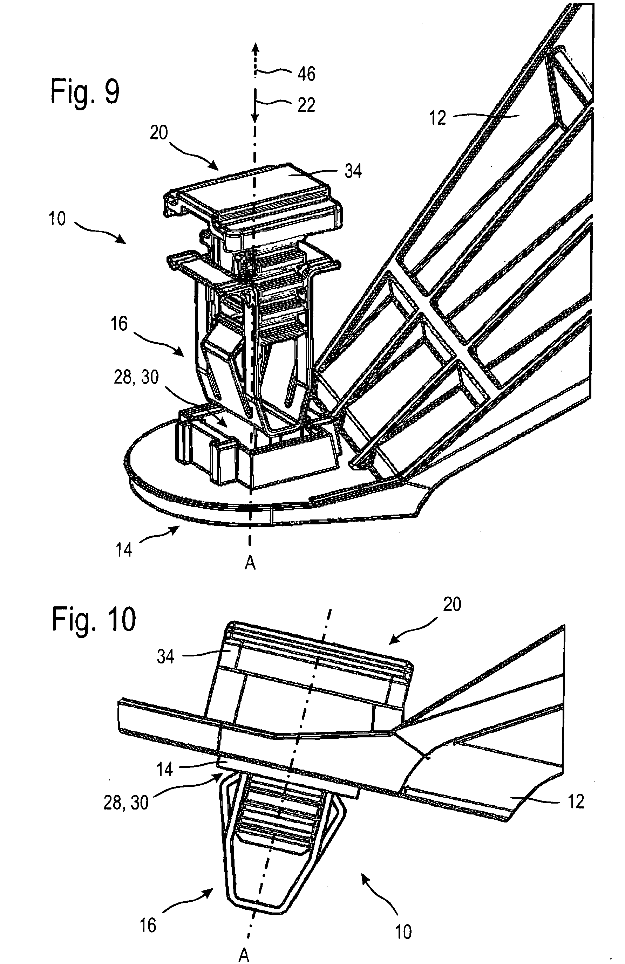

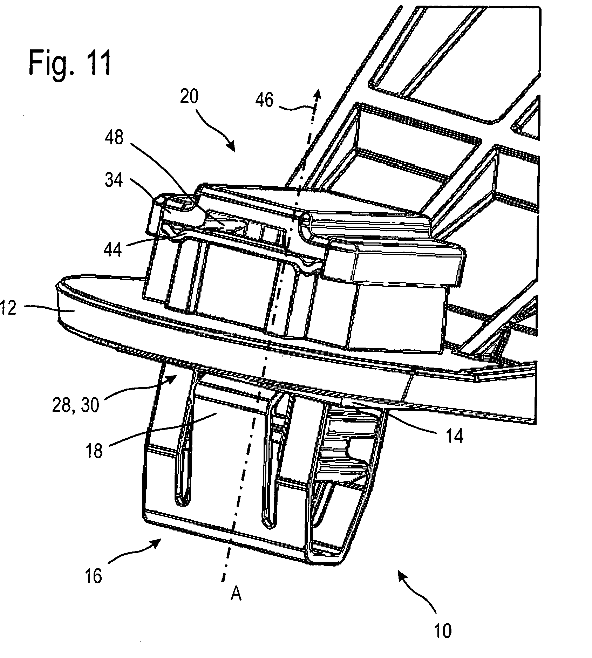

Die Figur 1 zeigt eine erste Ausführungsform einer Verbindungsbaugruppe 10, die zur Befestigung eines Anbauteils 12 an einem Trägerteil 14 (vgl. Figuren 9 bis 11) dient. Die Verbindungsbaugruppe 10 umfasst eine Klammer 16, die einen verformbaren Verriegelungsabschnitt 18 zur Befestigung der Klammer 16 am Trägerteil 14 aufweist, sowie einen separaten Verriegelungspin 20, der durch eine Bewegung in einer Montagerichtung 22 längs einer Montageachse A von der Klammer 16 aufgenommen werden kann. Die Klammer 16 und der Verriegelungspin 20 weisen zusammenwirkende Rastelemente 24, 26 auf, welche in einer Vormontagestellung (Figuren 4 und 5) und einer Verriegelungsstellung (Figuren 7 und 8) Schnappverbindungen ausbilden, um den Verriegelungspin 20 an der Klammer 16 axial zu fixieren. In der Vormontagestellung gemäß Figur 4 bilden der Verriegelungspin 20 und die Klammer 16 eine vormontierte Verbindungsbaugruppe, die durch eine Bewegung längs der Montageachse A in Montageöffnungen 28, 30 des Anbauteils 12 und des Trägerteils 14 einführbar (vgl. Figur 9) sowie in eine Befestigungsposition (vgl. Figuren 10 und 11) bewegbar ist. In dieser Befestigungsposition der vormontierten Verbindungsbaugruppe wird der Verriegelungspin 20 dann weiter in Montagerichtung 22 verschoben, sodass sich die Verbindungsbaugruppe 10 aus der Vormontagestellung in die Verriegelungsstellung bewegt (Figuren 10 und 11). In dieser Verriegelungsstellung sind das Anbauteil 12 und das Trägerteil 14 über die Verbindungsbaugruppe 10 zuverlässig miteinander verbunden. Quer zur Montageachse A wird die Verbindungsbaugruppe 10 auf Abscheren beansprucht, wobei eine sehr hohe Abscherkraft notwendig ist, um das am Trägerteil 14 befestigte Anbauteil 12 vom Trägerteil 14 zu lösen. Darüber hinaus hält die verriegelte Verbindungsbaugruppe 10 jedoch auch in axialer Richtung einer hohen Auszugskraft am Anbauteil 12 stand, sodass sich das Anbauteil 12 bei Verwendung einer Verbindungsbaugruppe 10 gemäß Figur 1 vorzugsweise erst ab Auszugskräften von über 700 N besonders bevorzugt über 1 kN vom Trägerteil 14 löst.

Die Figur 2 zeigt den Verriegelungspin 20 gemäß Figur 1 in einer perspektivischen Detailansicht. Der Verriegelungspin 20 ist hierbei ein im Wesentlichen starres Kunststoffteil mit einem Schaft 32, der in die Klammer 16 eingeführt werden kann. An einem axialen Ende des Schafts 32 ist ein Kopf 34 angeformt, der in der Verriegelungsstellung optional an der Klammer 16 anliegt, und an dem beim Lösen der Befestigung zwischen dem Anbauteil 12 und dem Trägerteil 14 ein Werkzeug angreifen kann. Im Bereich eines entgegengesetzten axialen Endes verjüngt sich der Schaft 32 zum Ende hin, sodass sich der Verriegelungspin 20 leichter in die Klammer 16 einführen lässt.

Im Schaft 32 sind Ausnehmungen vorgesehen, welche die Rastelemente 24 bilden, sowie eine axial verlaufende Nut, die ein Sperrelement 36 bildet. Auf die Funktion der Rast- und Sperrelemente 24, 36 wird später noch genauer eingegangen.

Die Figur 3 zeigt die Klammer 16 der Verbindungsbaugruppe 10 in einer perspektivischen Detailansicht. Die U-förmige Klammer 16 weist einen Steg 38 sowie zwei durch den Steg 38 verbundene, gegenüberliegende Seitenwände 40 auf, wobei die Seitenwände 40 jeweils einen verformbaren Verriegelungsabschnitt 18 umfassen. In den Seitenwänden 40 sind ferner jeweils zwei verformbare Rastelemente 26 und ein dazwischenliegendes Sperrelement 42 ausgebildet. Darüber hinaus weisen die Seitenwände 40 an einem dem Steg 38 entgegengesetzten Ende jeweils einen nach außen abgebogenen Lagerfortsatz 44 auf. Diese Lagerfortsätze 44 liegen in der Befestigungsposition der Verbindungsbaugruppe 10 am Rand der Montageöffnung 28 an und verhindern eine weitere Bewegung der Klammer 16 in Montagerichtung 22 (vgl. Figur 11). Im Übergangsbereich zwischen den Seitenwänden 40 und den Lagerfortsätzen 44 können zur Erhöhung der Verbindungssteifigkeit und Stabilität Sicken 45 ausgebildet sein.

Die Klammer 16 gemäß Figur 3 ist als einstückige Metallklammer ausgebildet, um mit dem Trägerteil 14 eine hochbelastbare Verbindung einzugehen, deren Qualität, z.B. hinsichtlich Spielfreiheit und Haltekraft, über die Zeit weitgehend konstant bleibt. Unerwünschte Relaxationseffekte, die insbesondere bei Kunststoffklammern auftreten und die Qualität der Verbindung im Laufe der Zeit beeinträchtigen, werden durch die Verwendung von Metall, vorzugsweise Stahl, verhindert. Im Übrigen lässt sich die Metallklammer mit geringem Aufwand als Biege-/Stanzteil fertigen.

Die Figur 4 zeigt eine perspektivische Ansicht der Verbindungsbaugruppe 10 in der Vormontagestellung. Ausgehend von Figur 1 ist dabei der Verriegelungspin 20 in Montagerichtung 22 längs der Montageachse A verschoben und zwischen den Seitenwänden 40 der Klammer 16 aufgenommen. In der dargestellten Vormontagestellung bilden die Rastelemente 24 des Verriegelungspins 20 mit den Rastelementen 26 der Klammer 16 eine Schnappverbindung aus, um den Verriegelungspin 20 an der Klammer 16 axial zu fixieren. Diese Schnappverbindung weist in der Vormontagestellung eine axiale Haltekraft auf, die größer ist als eine axiale Widerstandskraft beim Bewegen der vormontierten Verbindungsbaugruppe in die oder aus der Befestigungsposition. Dies bietet den Vorteil, dass ein Monteur per Hand oder mit einem einfachen Werkzeug lediglich am Verriegelungspin 20 angreifen muss, um das Anbauteil 12 am Trägerteil 14 zu befestigen bzw. vom Trägerteil 14 zu lösen. Die vormontierte Verbindungsbaugruppe 10 gemäß Figur 9 bleibt bei einer Bewegung des Verriegelungspins 20 in der Montagerichtung 22 solange in der Vormontagestellung, bis die Verbindungsbaugruppe 10 ihre Befestigungsposition einnimmt, d.h. bis die abgebogenen Lagerfortsätze 44 der Klammer 16 am Rand der Montageöffnung 28 des Anbauteils 12 anliegen. Erst nach Erreichen dieser Befestigungsposition bewegt sich der Verriegelungspin 20 relativ zur Klammer 16 in die Verriegelungsstellung der Verbindungsbaugruppe 10, wie sie in Figur 11 abgebildet ist.

Zum Lösen des Anbauteils 12 vom Trägerteil 14, muss wiederum lediglich am Verriegelungspin 20 angegriffen werden. Um den Verriegelungspin 20 in einer der Montagerichtung 22 entgegengesetzten Demontagerichtung 46 besser betätigen zu können, ist die Verbindungsbaugruppe 10 so ausgebildet, dass in der Verriegelungsstellung zwischen dem Verriegelungspin 20 und der Klammer 16 ein Schlitz 48 entsteht, in den ein (nicht dargestelltes) Werkzeug eingreifen kann. Mithilfe des Werkzeugs lässt sich der Verriegelungspin 20 in Demontagerichtung 46 relativ zur Klammer 16 bewegen. Sobald die Vormontagestellung erreicht ist, bilden der Verriegelungspin 20 und die Klammer 16 wieder eine Schnappverbindung aus, deren axiale Haltekraft so groß ist, dass sich durch weiteres Bewegen des Verriegelungspins 20 in Demontagerichtung die gesamte Verbindungsbaugruppe 10 in der Vormontagestellung aus den Montageöffnungen 28, 30 entnehmen lässt (Figur 9). Die Verbindungsbaugruppe 10 ist sofort wieder einsatzbereit und kann im vorzugsweise mehrfach verwendet werden.

Die oben erwähnte, axiale Widerstandskraft beim Bewegen der Verbindungsbaugruppe 10 in die bzw. aus der Befestigungsposition ergibt sich beispielsweise dadurch, dass der Verriegelungsabschnitt 18 der Klammer 16 beim Bewegen in die Befestigungsposition eine Schnappverbindung mit dem Anbauteil 12 und/oder dem Trägerteil 14 ausbildet. Bei einer sehr passgenauen Fertigung der Verbindungsbaugruppe 10 relativ zu den Montageöffnungen 28, 30 umfasst diese Widerstandskraft darüber hinaus auch eine gewisse Reibungskomponente.

Die Figur 5 zeigt einen Längsschnitt durch die Verbindungsbaugruppe 10 gemäß Figur 4, wobei der Schnitt durch die Rastelemente 24, 26 des Verriegelungspins 20 bzw. der Klammer 16 geführt ist, sodass die Schnappverbindung zwischen den Rastelementen 24, 26 besonders gut erkennbar ist. Da die ineinanderschnappenden Abschnitte der Rastelemente 24, 26 im Schnitt gemäß Figur 5 etwa kreissegmentförmig ausgebildet sind, lässt sich diese Schnappverbindung nach Überwinden einer axialen Haltekraft wieder problemlos lösen, wobei die Haltekraft vorzugsweise bei etwa 50 bis 100 N liegt.

Die Figur 6 zeigt einen Längsschnitt durch die Verbindungsbaugruppe 10 gemäß Figur 4, wobei der Schnitt mittig durch die Sperrelemente 36, 42 des Verriegelungspins 20 bzw. der Klammer 16 geführt ist. Aufgrund der in Figur 6 vorgesehenen Sperrelementgeometrie ist klar, dass die Sperrelemente 36, 42 in der Vormontagestellung eine Rastverbindung ausbilden und danach eine zerstörungsfreie Demontagebewegung des Verriegelungspins 20 relativ zur Klammer 16 entgegen der Montagerichtung 22 verhindern. Somit ist der Verriegelungspin 20 nach einmaligem Zusammensetzen der Verbindungsbaugruppe 10 in die Vormontagestellung unverlierbar mit der Klammer 16 verbunden. Ferner wird durch diese Sperrelemente sichergestellt, dass sich bei einer Demontage der Verbindungsbaugruppe 10 mittels axialem Zug am Verriegelungspin 20 in Demontagerichtung 46 auch die Klammer 16 löst und nicht in den Montageöffnungen 28, 30 verbleibt.

Die Figur 7 zeigt die Verbindungsbaugruppe 10 gemäß Figur 1 in der Verriegelungsstellung, in welcher der Kopf 34 des Verriegelungspins 20 abschnittsweise an die Lagerfortsätze 44 der Klammer 16 angrenzt, unter Umständen sogar an den Lagerfortsätzen 44 abschnittsweise anliegt.

In Figur 8 ist ein Längsschnitt durch die Verbindungsbaugruppe 10 gemäß Figur 7 dargestellt, wobei der Schnitt analog zu Figur 5 durch die Rastelemente 24, 26 geführt ist. Wiederum ist gut zu erkennen, dass die Rastelemente 24 des Verriegelungspins 20 und die Rastelemente 26 der Klammer 16 auch in der Verriegelungsstellung eine Schnappverbindung ausbilden. Darüber hinaus wird deutlich, dass der Schaft 32 die Verriegelungsabschnitte 18 verriegelt. Dies bedeutet, dass der Schaft 32 die Verriegelungsabschnitte 18 von der Montageachse A weg nach außen bewegt oder zumindest eine Bewegung der Verriegelungsabschnitte 18 nach innen, in Richtung zur Montageachse A verhindert. Im eingebauten Zustand hintergreifen die Verriegelungsabschnitte 18 der in der Verriegelungsstellung gemäß Figur 8 befindlichen Verbindungsbaugruppe 10 die Montageöffnung 30 des Trägerteils 14 (vgl. Figur 10). Dadurch ist das Anbauteil 12 sowohl längs der Montageachse A als auch quer dazu zuverlässig am Trägerteil 14 befestigt.

Die Figur 9 zeigt die Verbindungsbaugruppe 10 in ihrer Vormontagestellung kurz vor dem Einführen in die Montageöffnungen 28, 30 des Anbau- bzw. Trägerteils 12, 14. Die Figur 9 könnte jedoch gleichermaßen auch den Demontagevorgang beim Lösen der Verbindung zwischen Anbauteil 12 und Trägerteil 14 darstellen, bei dem die Verbindungsbaugruppe 10 zunächst in die Vormontagestellung entriegelt und dann in Demontagerichtung 46 entnommen wird.

Die Figur 10 zeigt das mittels der Verbindungsbaugruppe 10 am Trägerteil 14 befestigte Anbauteil 12. Die Verbindungsbaugruppe 10 befindet sich dabei sowohl in der Befestigungsposition, in welcher die Lagerfortsätze 44 der Klammer 16 am Rand der Montageöffnung 28 des Anbauteils 12 anliegen, als auch in der Verriegelungsstellung, in der die verformbaren Rastelemente 26 der Klammer 16 mit den dem Kopf 34 nächstliegenden Rastelementen 24 des Verriegelungspins 20 eine Schnappverbindung ausbilden. Zusätzlich können in der Verriegelungsstellung auch Abschnitte des Kopfes 34 an den Lagerfortsätzen 44 anliegen.

Die Figur 11 zeigt die Situation gemäß Figur 10 lediglich aus einer anderen Perspektive. Dabei ist der Schlitz 48, der in der Verriegelungsstellung zwischen den Lagerfortsätzen 44 und dem Kopf 34 entsteht, gut zu erkennen. In diesen Schlitz 48 kann beispielsweise ein geeignetes Werkzeug eingreifen, welches, in Demontagerichtung 46 bewegt, zunächst die Verbindungsbaugruppe 10 in die Vormontagestellung entriegelt und dann die gesamte Verbindungsbaugruppe 10 aus den Montageöffnungen 28, 30 entnimmt, um das Anbauteil 12 vom Trägerteil 14 zu lösen.

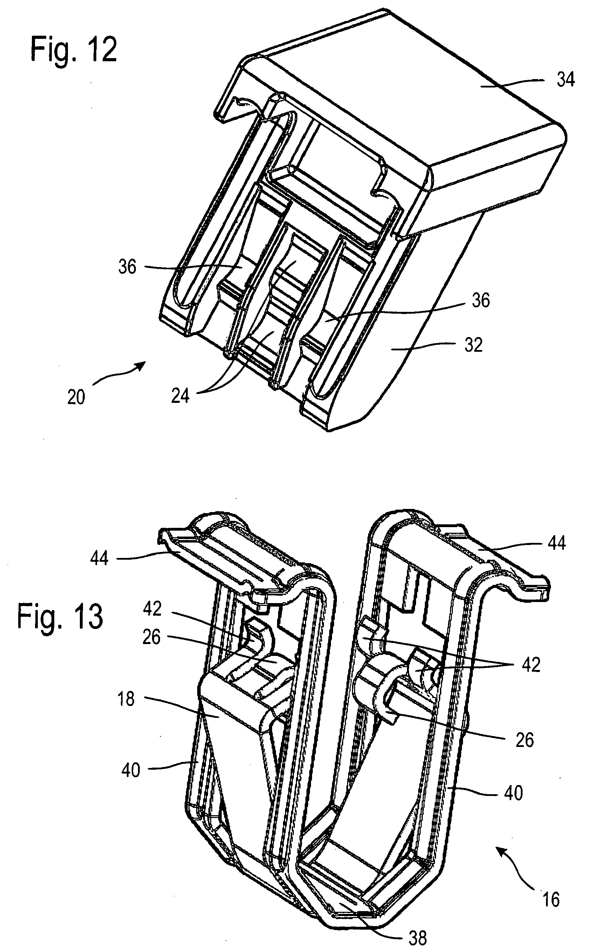

Die Figuren 12 bis 22 zeigen die Verbindungsbaugruppe 10 in einer kompakteren, zweiten Ausführungsform. Der prinzipielle Aufbau und die Funktion der ersten und zweiten Ausführungsform stimmen dabei weitgehend überein, weshalb hierzu lediglich auf die Beschreibung der ersten Ausführungsform gemäß den Figuren 1 bis 11 verwiesen wird, um Wiederholungen zu vermeiden. Nachfolgend wird hauptsächlich auf die Unterschiede der Ausführungsformen eingegangen, die im Wesentlichen strukturelle Details des Verriegelungspins 20 und der Klammer 16 betreffen.

Die Figur 12 zeigt analog zu Figur 2 den Verriegelungspin 20 der Verbindungsbaugruppe 10. Im Unterschied zur ersten Ausführungsform sind hierbei die Rastelemente 24 mittig zwischen den Sperrelementen 36 angeordnet.

Die Figur 13 zeigt analog zu Figur 3 die Klammer 16 der Verbindungsbaugruppe 10 gemäß der zweiten Ausführungsform. Der wesentliche Unterschied ist hierbei, dass die Verriegelungsabschnitte 18 die Sperrelemente 42 und die Rastelemente 26 aufweisen.

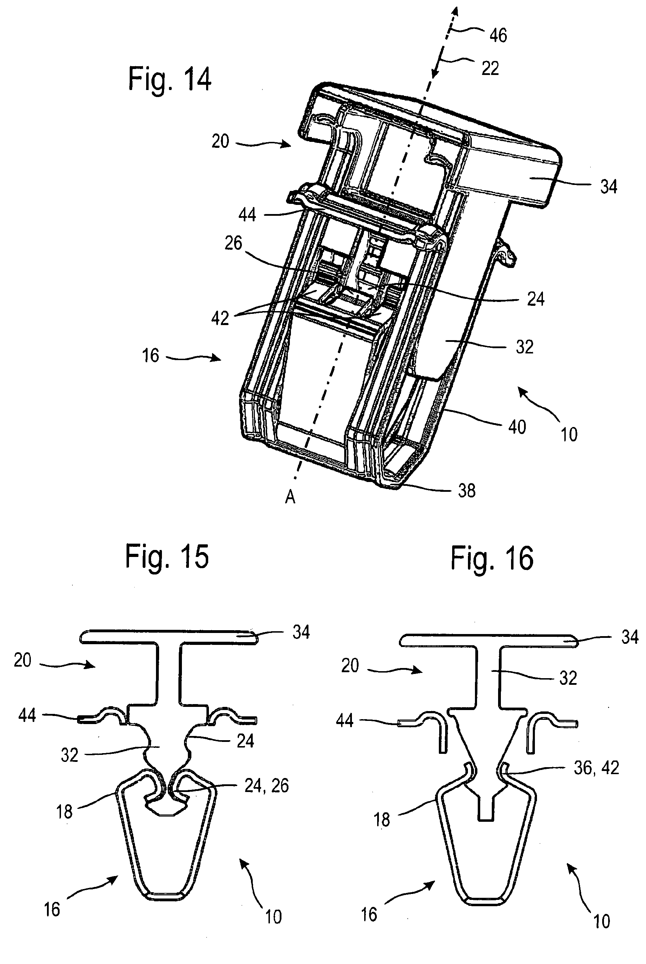

Analog zu Figur 4 ist in der Figur 14 die Verbindungsbaugruppe 10 in der Vormontagestellung dargestellt.

Die Figur 15 zeigt einen Längsschnitt durch die Verbindungsbaugruppe 10 gemäß Figur 14, wobei der Schnitt mittig durch die Rastelemente 24, 26 geführt ist.

Die Figur 16 zeigt ebenfalls einen Längsschnitt durch die Verbindungsbaugruppe 10 gemäß Figur 14, wobei die Schnittebene jedoch versetzt zur Mitte durch die Sperrelemente 36, 42 gelegt wurde. Aus der Geometrie der zusammenwirkenden Sperrelemente 36, 42 wird deutlich, dass der Verriegelungspin 20 und die Klammer 16 in dieser zweiten Ausführungsform der Verbindungsbaugruppe 10 ausgehend von der Vormontagestellung gemäß Figur 16 auch wieder zerstörungsfrei voneinander getrennt werden können, sodass sie wieder als unverbundene, separate Baukomponenten vorliegen. Die axiale Haltekraft zwischen dem Verriegelungspin 20 und der Klammer 16 in der Vormontagestellung lässt sich dabei über geometrische Veränderungen, insbesondere Winkeländerungen in den Anlaufschrägen der Rastelemente 24, 26 und/oder Sperrelemente 36, 42 einstellen.

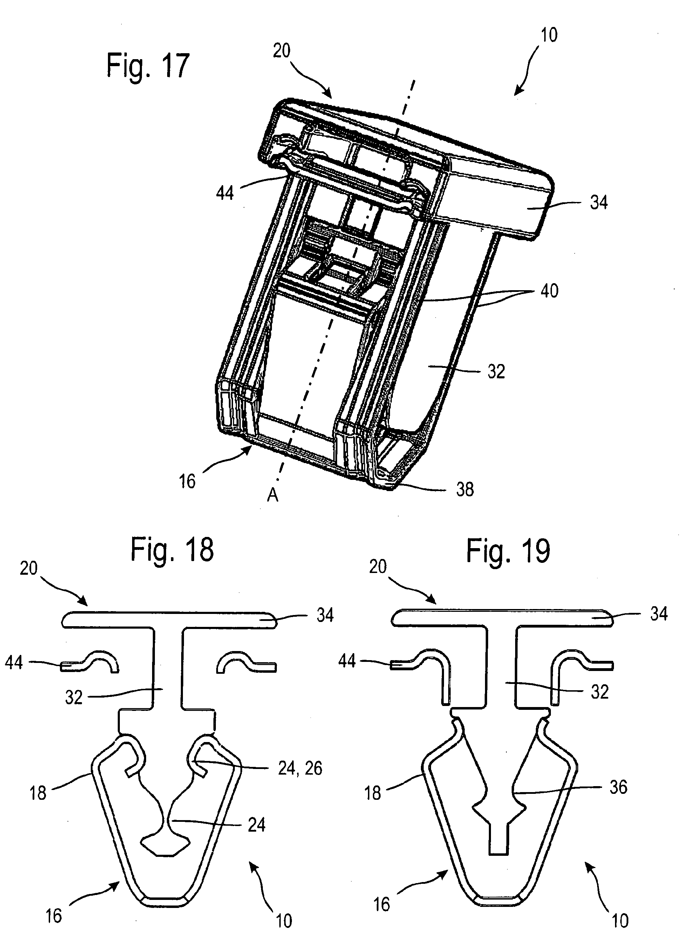

Analog zu Figur 7 ist in der Figur 17 die Verbindungsbaugruppe 10 in der Verriegelungsstellung dargestellt.

Die Figuren 18 und 19 zeigen Schnitte durch die Verbindungsbaugruppe 10 gemäß Figur 17, wobei die Schnittführung derjenigen der Figuren 15 und 16 entspricht. Aus den Schnittzeichnungen wird deutlich, dass die gegenüberliegenden Verriegelungsabschnitte 18 der Klammer 16 beim Überführen der Verbindungsbaugruppe 10 von der Vormontagestellung in die Verriegelungsstellung vom Schaft 32 des Verriegelungspins 20 auseinandergedrückt werden.

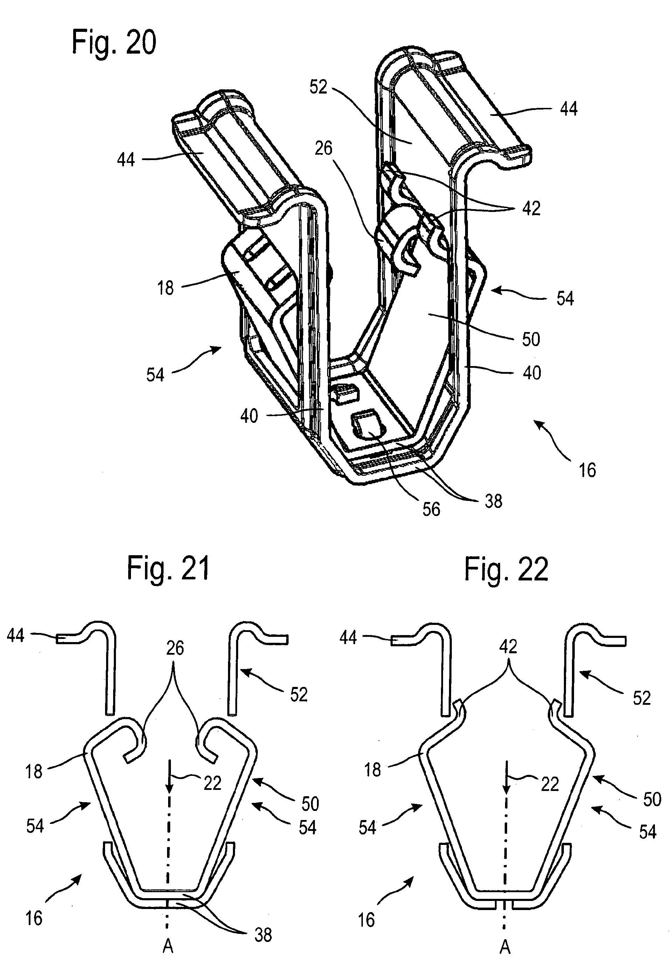

Die Figuren 20 bis 22 zeigen eine zweiteilige Ausführungsvariante der Klammer 16 für die Verbindungsbaugruppe 10 gemäß der zweiten Ausführungsform. In dieser Ausführungsvariante umfasst die Klammer 16 ein verformbares Verriegelungsteil 50 sowie ein das Verriegelungsteil 50 aufnehmendes Halteteil 52. Dabei ist zumindest das Verriegelungsteil 50, vorzugsweise auch das Halteteil 52, aus Metall gefertigt.

Die zweiteilige Klammer 16 gemäß Figur 20 wird zusammengesetzt, indem das U-förmige Verriegelungsteil 50 in das ebenfalls U-förmige Halteteil 52 in Montagerichtung 22 eingesetzt wird. Dabei klipsen die Verriegelungsabschnitte 18 des Verriegelungsteils 50 in Seitenwandausschnitte 54 des Halteteils 52 ein, sodass das Verriegelungsteil 50 am Halteteil 52 fixiert ist. Optional können im Bereich der Stege 38 des Verriegelungs- und Halteteils 50, 52 zusätzliche Haltemittel 56 vorgesehen sein. Gemäß Figur 20 sind diese Haltemittel 56 im Steg 38 des Halteteils 52 ausgebildete Zungen, welche durch im Steg 38 des Verriegelungsteils 50 ausgebildete Öffnungen gesteckt und dann umgebogen sind, um das Verriegelungsteil 50 zuverlässig am Halteteil 52 zu befestigen.

Die Figuren 21 und 22 zeigen Längsschnitte durch die Klammer 16 gemäß Figur 20, wobei die Schnittführung derjenigen aus den Figuren 15 und 16 bzw. den Figuren 18 und 19 entspricht. Die Seitenwände 40 des Halteteils 52 bilden dabei Anschläge für die Sperrelemente 42, sodass die Bewegung der Verriegelungsabschnitte 18 voneinander weg begrenzt ist. Dadurch wird verhindert, dass die Verriegelungsabschnitte 18 vollständig durch die Seitenwandausschnitte 54 nach außen treten und sich in unerwünschter Weise verformen.

## Patentansprüche

1. Verbindungsbaugruppe (10) zur Befestigung eines Anbauteils (12) an einem Trägerteil (14), mit
einer Klammer (16), die einen verformbaren Verriegelungsabschnitt (18) zur Befestigung der Klammer (16) am Trägerteil (14) aufweist, sowie
einem separaten Verriegelungspin (20), der durch eine Bewegung in einer Montagerichtung (22) längs einer Montageachse (A) von der Klammer (16) aufgenommen werden kann,
wobei die Klammer (16) und der Verriegelungspin (20) zusammenwirkende Rastelemente (24, 26) aufweisen, welche in einer Vormontagestellung und einer Verriegelungsstellung Schnappverbindungen ausbilden, um den Verriegelungspin (20) an der Klammer (16) axial zu fixieren,
wobei der Verriegelungspin (20) und die Klammer (16) in der Vormontagestellung eine vormontierte Verbindungsbaugruppe bilden, die durch eine Bewegung längs der Montageachse (A) in Montageöffnungen (28, 30) des Anbauteils (12) und des Trägerteils (14) einführbar sowie in eine Befestigungsposition bewegbar ist, und
wobei der Verriegelungsabschnitt (18) der Klammer (16) beim Bewegen in die Befestigungsposition eine Schnappverbindung mit dem Anbauteil (12) und/oder dem Trägerteil (14) ausbildet,
wobei die Schnappverbindung zwischen der Klammer (16) und dem Verriegelungspin (20) in der Vormontagestellung eine axiale Haltekraft aufweist, die größer ist als eine axiale Widerstandskraft beim Bewegen der Verbindungsbaugruppe (10) in die bzw. aus der Befestigungsposition,
**dadurch gekennzeichnet, dass** die Klammer (16) eine U-förmige Metallklammer ist und einen Steg (38) sowie genau zwei durch den Steg (38) verbundene, gegenüberliegende Seitenwände (40) aufweist, wobei die Seitenwände (40) jeweils einen verformbaren Verriegelungsabschnitt (18) aufweisen,
wobei die Klammer (16) und der Verriegelungspin (20) so ausgebildet sind, dass sich bei einer Demontage der Verbindungsbaugruppe (10) ausgehend von der Verriegelungsstellung der Verriegelungspin (20) mittels axialem Zug in einer zur Montagerichtung (22) entgegengesetzten Demontagerichtung (46) relativ zur Klammer (16) bewegt, bis die Vormontagestellung erreicht ist.

2. Verbindungsbaugruppe nach Anspruch 1, **dadurch gekennzeichnet, dass** die Klammer (16) und der Verriegelungspin (20) zusammenwirkende Sperrelemente (36, 42) aufweisen, welche in der Vormontagestellung eine Rastverbindung ausbilden und eine zerstörungsfreie Demontagebewegung des Verriegelungspins (20) relativ zur Klammer (16) entgegen der Montagerichtung (22) verhindern.

3. Verbindungsbaugruppe nach Anspruch 2, **dadurch gekennzeichnet, dass** die Seitenwände (40) jeweils ein verformbares Sperrelement (42) aufweisen.

4. Verbindungsbaugruppe nach einem der vorhergehenden Ansprüche, **dadurch gekennzeichnet, dass** die Seitenwände (40) jeweils ein verformbares Rastelement (26) aufweisen.

5. Verbindungsbaugruppe nach Anspruch 2, **dadurch gekennzeichnet, dass** die Seitenwände (40) jeweils zwei verformbare Rastelemente (26) und ein dazwischenliegendes Sperrelement (42) aufweisen.

6. Verbindungsbaugruppe nach einem der Ansprüche 3 bis 5, **dadurch gekennzeichnet, dass** der Verriegelungsabschnitt (18) das Sperrelement (42) und/oder das Rastelement (26) aufweist.

7. Verbindungsbaugruppe nach einem der vorhergehenden Ansprüche, **dadurch gekennzeichnet, dass** der Verriegelungspin (20) ein im Wesentlichen starres Kunststoffteil ist.

8. Verbindungsbaugruppe nach einem der vorhergehenden Ansprüche, **dadurch gekennzeichnet, dass** die Klammer (16) einstückig ausgebildet ist.

9. Verbindungsbaugruppe nach einem der Ansprüche 1 bis 7, **dadurch gekennzeichnet, dass** die Klammer (16) zweiteilig ausgebildet ist.

10. Verbindungsbaugruppe nach Anspruch 9, **dadurch gekennzeichnet, dass** die Klammer (16) ein verformbares Verriegelungsteil (50) sowie ein das Verriegelungsteil (50) aufnehmendes Halteteil (52) umfasst, wobei zumindest das Verriegelungsteil (50) aus Metall gefertigt ist.

## Claims

1. A connecting assembly (10) for fastening a mount-on part (12) to a carrier part (14), comprising
a clip (16) which includes a deformable locking section (18) for fastening the clip (16) to the carrier part (14), and
a separate locking pin (20) which is adapted to be received by the clip (16) by a movement in a mounting direction (22) along a mounting axis (A),
the clip (16) and the locking pin (20) including cooperating latching members (24, 26) which form snap connections in a preassembly position and a locking position to fix the locking pin (20) axially on the clip (16),
the locking pin (20) and the clip (16), when in the preassembly position, forming a preassembled connecting assembly which is insertable into mounting openings (28, 30) of the mount-on part (12) and of the carrier part (14) by a movement along the mounting axis (A) and is movable to a fastening position, and
upon movement to the fastening position, the locking section (18) of the clip (16) producing a snap connection with the mount-on part (12) and/or the carrier part (14),
in the preassembly position, the snap connection between the clip (16) and the locking pin (20) having an axial holding force which is greater than an axial force of resistance when the connecting assembly (10) is moved to or out of the fastening position,
**characterized in that** the clip (16) is a U-shaped metal clip and includes a web (38) and exactly two opposite side walls (40) connected by the web (38), the side walls (40) each including a deformable locking section (18),
the clip (16) and the locking pin (20) being configured such that when the connecting assembly (10) is dismounted starting from the locking position, the locking pin (20) moves in relation to the clip (16) by means of pulling axially in a dismounting direction (46) opposite to the mounting direction (22) until the preassembly position is reached.

2. The connecting assembly according to claim 1, **characterized in that** the clip (16) and the locking pin (20) include cooperating blocking members (36, 42) which in the preassembly position form a latching connection and prevent a nondestructive dismounting movement of the locking pin (20) in relation to the clip (16) contrary to the mounting direction (22).

3. The connecting assembly according to claim 2, **characterized in that** the side walls (40) each include a deformable blocking member (42).

4. The connecting assembly according to any of the preceding claims, **characterized in that** the side walls (40) each include a deformable latching member (26).

5. The connecting assembly according to claim 2, **characterized in that** the side walls (40) each include two deformable latching members (26) and a blocking member (42) in between.

6. The connecting assembly according to any of claims 3 to 5, **characterized in that** the locking section (18) includes the blocking member (42) and/or the latching member (26).

7. The connecting assembly according to any of the preceding claims, **characterized in that** the locking pin (20) is a substantially rigid plastic part.

8. The connecting assembly according to any of the preceding claims, **characterized in that** the clip (16) is formed in one piece.

9. The connecting assembly according to any of claims 1 to 7, **characterized in that** the clip (16) is formed in two pieces.

10. The connecting assembly according to claim 9, **characterized in that** the clip (16) comprises a deformable locking part (50) and a holding part (52) receiving the locking part (50), at least the locking part (50) being produced from metal.

## Revendications

1. Ensemble de raccordement (10) pour la fixation d'une pièce à rapporter (12) sur une pièce support (14), comportant
une pince (16) qui présente un tronçon de verrouillage (18) déformable pour la fixation de la pince (16) sur la pièce support (14), et
un pion de verrouillage (20) séparé qui peut être reçu par la pince (16) par un mouvement dans un sens de montage (22) le long d'un axe de montage (A),
la pince (16) et le pion de verrouillage (20) présentant des éléments d'enclenchement (24, 26) coopérant qui forment des liaisons par encliquetage dans une position de pré-montage et dans une position de verrouillage pour fixer le pion de verrouillage (20) axialement sur la pince (16),
le pion de verrouillage (20) et la pince (16) formant dans la position de pré-montage un ensemble de raccordement pré-monté qui, par un mouvement le long de l'axe de montage (A), est apte à être inséré dans des orifices de montage (28, 30) de la pièce à rapporter (12) et de la pièce support (14) et à être déplacé dans une position de fixation, et
le tronçon de verrouillage (18) de la pince (16) formant une liaison par encliquetage avec la pièce à rapporter (12) et/ou la pièce support (14) lors du déplacement dans la positon de fixation,
la liaison par encliquetage entre la pince (16) et le pion de verrouillage (20) présentant dans la position de pré-montage une force de retenue axiale qui est supérieure à une force de résistance axiale lors du déplacement de l'ensemble de raccordement (10) vers ou hors de la positon de fixation,
**caractérisé en ce que** la pince (16) est une pince métallique en forme de U et présente une barrette (38) ainsi qu'exactement deux parois latérales (40) opposées reliées par la barrette (38), les parois latérales (40) présentant chacune un tronçon de verrouillage (18) déformable,
la pince (16) et le pion de verrouillage (20) étant réalisés de telle sorte que lors d'un démontage de l'ensemble de raccordement (10) à partir de la position de verrouillage, le pion de verrouillage (20) se déplace par rapport à la pince (16) dans un sens de démontage (46) opposé au sens de montage (22) par une traction axiale jusqu'à ce que la position de pré-montage soit atteinte.

2. Ensemble de raccordement selon la revendication 1, **caractérisé en ce que** la pince (16) et le pion de verrouillage (20) présentent des éléments de blocage (36, 42) coopérant qui, dans la position de pré-montage, forment une liaison par encliquetage et empêchent un mouvement de démontage non destructif du pion de verrouillage (20) par rapport à la pince (16) à l'encontre du sens de montage (22).

3. Ensemble de raccordement selon la revendication 2, **caractérisé en ce que** les parois latérales (40) présentent chacune un élément de blocage (42) déformable.

4. Ensemble de raccordement selon l'une des revendications précédentes, **caractérisé en ce que** les parois latérales (40) présentent chacune un élément d'enclenchement (26) déformable.

5. Ensemble de raccordement selon la revendication 2, **caractérisé en ce que** les parois latérales (40) présentent chacune deux éléments d'enclenchement (26) déformables et un élément de blocage (42) agencé entre ces derniers.

6. Ensemble de raccordement selon l'une des revendications 3 à 5, **caractérisé en ce que** le tronçon de verrouillage (18) présente l'élément de blocage (42) et/ou l'élément d'enclenchement (26).

7. Ensemble de raccordement selon l'une des revendications précédentes, **caractérisé en ce que** le pion de verrouillage (20) est une pièce en matière plastique sensiblement rigide.

8. Ensemble de raccordement selon l'une des revendications précédentes, **caractérisé en ce que** la pince (16) est réalisée en une pièce.

9. Ensemble de raccordement selon l'une des revendications 1 à 7, **caractérisé en ce que** la pince (16) est réalisée en deux pièces.

10. Ensemble de raccordement selon la revendication 9, **caractérisé en ce que** la pince (16) présente une pièce de verrouillage (50) déformable ainsi qu'une pièce de retenue (52) recevant la pièce de verrouillage (50), au moins la pièce de verrouillage (50) étant fabriquée en métal.
